# EUROPÄISCHE PATENTSCHRIFT

(11) **EP 1 653 200 B1**
(45) Veröffentlichungstag und Bekanntmachung des Hinweises auf die Patenterteilung: **08.10.2008**
(21) Anmeldenummer: 05022326.2
(22) Anmeldetag: 13.10.2005
(51) Int. Cl.: G01D 11/24, G01V 8/10, G02B 7/02, G01D 5/26

(54) **Optischer Sensor**
Optical sensor
Capteur optique

(30) Priorität: 21.10.2004 DE 102004051326
(43) Veröffentlichungstag der Anmeldung: 03.05.2006
(73) Patentinhaber: Leuze electronic GmbH + Co KG, 73277 Owen/Teck (DE)
(72) Erfinder: Klaiber, Jörg, 71157 Hildrizhausen (DE)
(74) Vertreter: Ruckh, Rainer Gerhard

(56) Entgegenhaltungen:
- DE-A1- 2 656 185
- US-A- 3 504 551
- PATENT ABSTRACTS OF JAPAN Bd. 009, Nr. 329 (P-416), 24. Dezember 1985 (1985-12-24) & JP 60 154183 A (MATSUSHITA DENKO KK), 13. August 1985 (1985-08-13)

## Beschreibung

Die Erfindung betrifft einen optischen Sensor gemäß dem Oberbegriff des Anspruchs 1.

Derartige optische Sensoren können generell als Lichtschranken, Reflexionslichtschranken, Lichttaster oder Distanzsensoren ausgebildet sein. Zur Objektdetektion weisen die optischen Sensoren einen Sendelichtstrahlen emittierenden Sender und einen Empfangslichtstrahlen empfangenden Empfänger auf. Weiterhin ist eine Auswerteeinheit vorgesehen, in welcher in Abhängigkeit der Empfangssignale am Ausgang des Empfängers ein Objektfeststellungssignal generiert wird. Zur Strahlformung der Sendelichtstrahlen und zur Fokussierung der Empfangslichtstrahlen auf den Empfänger sind Optikelemente in Form von Linsen vorgesehen.

Bei der Herstellung von optischen Sensoren der eingangs genannten Art existieren zu einem bestimmten Sensortyp, wie einem Lichttaster, unterschiedliche Gerätevarianten. Die Gerätevarianten können sich insbesondere in optischen Leistungsmerkmalen wie beispielsweise der minimalen und maximalen Reichweite, innerhalb welcher Objekte erfasst werden können, unterscheiden.

Zur Herstellung derartiger unterschiedlicher Gerätevarianten werden verschiedenartige Optikelemente, wie Linsen oder optische Filter, benötigt. Zum Einbau derartiger unterschiedlicher Optikelemente werden verschiedenartige Gehäusevarianten mit individuell ausgestalteten Halterungen und Befestigungsmitteln für die einzelnen Optikelemente benötigt. Alternativ oder zusätzlich können beispielsweise große Linsen mit zusätzlichen Bauteilen wie Bedruckungen abgedeckt werden, um deren optische Eigenschaften zu varüeren.

In jedem Fall ist zur Herstellung unterschiedlicher Varianten von optischen Sensoren eine unerwünscht hohe Anzahl verschiedener Teile notwendig. Insbesondere die damit verbundenen Kosten für die Logistik und Lagerhaltung erhöhen die Herstellkosten der optischen Sensoren erheblich.

Die DE 26 56 185 A1 betrifft eine Reflexionslichtschranke mit einer Lumineszenz-Diode als Sender und einer Fotodiode als Empfänger, die in einem gemeinsamen Gehäuse integriert sind. Das Gehäuse umfasst einen massiven einteiligen Gehäusehohlkörper mit zwei rückseitigen Bohrungen, in welche der Sender und der Empfänger einführbar sind, so das deren lichtempfindliche Vorderseite in einen Hohlraum des Gehäusehohlkörpers ragen. Im oberen Teil des Gehäusehohlkörpers ist eine Nut angebracht, die als Aufnahme für eine Linse dient.

In der JP 60154183 A ist eine Schwenkhalterung für ein Spiegelelement beschrieben. Diese Halterung umfasst eine Halbkugelschale als Aufnahme für den Spiegel, sowie eine halbkreisförmige bogenförmige Halterung, deren oberes Ende mit der Halbkugelschale verbindbar ist. Die von diesen beiden Komponenten gebildete Baueinheit kann in einer Aufnahme eines Gehäuses gelagert werden.

Der Erfindung liegt die Aufgabe zugrunde einen optischen Sensor der eingangs genannten Art bereitzustellen, welcher flexibel einsetzbar und kostengünstig herstellbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor weist wenigstens ein Gehäuse zur Aufnahme von Sensorkomponenten auf. Die Sensorkomponenten umfassen einen Sendelichtstrahlen emittierenden Sender, einen Empfangslichtstrahlen empfangenden Empfänger und eine Auswerteeinheit, in welcher in Abhängigkeit der am Ausgang des Empfängers anstehenden Empfangssignale ein Objektfeststellungssignal generiert wird. In dem Gehäuse ist eine Aufnahme vorgesehen, welche eine Blendenöffnung variabler Größe aufweist, in dem zumindest ein Teil der Blendenöffnung durch zumindest eine klappbare Blende abdeckbar ist. Dadurch ist die Aufnahme zur Fixierung von Optikelementen unterschiedlicher Anzahl und/oder Größe adaptierbar.

Der Grundgedanke der Erfindung besteht darin, dass an der adaptiven Aufnahme unterschiedliche Optikelemente fixiert werden können. Damit können ohne Verwendung individueller Bauteile unterschiedliche Optikelemente zur Realisierung verschiedener Sensorvarianten in dem optischen Sensor integriert werden.

Die Aufnahme ist dabei bevorzugt Bestandteil des Gehäuses des optischen Sensors und insbesondere einstückig mit diesem ausgebildet. Damit können die Optikelemente unterschiedlicher Sensorvarianten in demselben Gehäuse ohne Verwendung von Zusatzbauteilen integriert werden. Eine Baureihe mit unterschiedlichen Varianten eines optischen Sensors kann somit mit einem geringen Bauteileaufwand hergestellt werden, wodurch die Herstellkosten für den optischen Sensor äußerst gering gehalten werden können.

Zur Variation der Größe der Blendenöffnung sind klappbare Blenden vorgesehen, die in der Blendenöffnung liegen können, um diese zu verkleinern oder aus dem Bereich der Blendenöffnung herausgeklappt werden können, wodurch diese entsprechend vergrößert wird.

Die klappbaren Blenden sind dabei über Schwächungsstrukturen mit der Aufnahme, insbesondere den die Blendenöffnung begrenzenden Wandelementen verbunden. Die Schwächungsstrukturen können als Filmscharniere oder dergleichen ausgebildet sein. Damit können die Blenden einstückig mit den Wandelementen und dem Gehäuse ausgebildet sein, welches besonders vorteilhaft aus einem Kunststoffspritzteil besteht. Die Aufnahme mit den Blenden kann somit besonders kostengünstig hergestellt werden.

Weiterhin ist vorteilhaft, dass Optikelemente, insbesondere in Form von Linsen, in unterschiedlicher Ausbildungsform und Größe einfach und schnell an einer derartig ausgebildeten Aufnahme montiert werden können.

Die klappbaren Blenden sind so in der Blendenöffnung liegend angeordnet, dass ein Teil der Blendenöffnung noch frei bleibt, wobei in diesen Teil der Blendenöffnung eine erste Linse mit kleinen Abmessungen eingesetzt werden kann. Soll diese Linse durch eine größere Linse ersetzt werden, so wird die größere Linse in die Blendenöffnung eingeführt und verdrängt dabei die Blenden, in dem diese in den Innenraum der Aufnahme zurückgeklappt werden. Das Zurückklappen der Blenden erfolgt dabei allein durch das Einschieben der Linse, das heißt ein separates Ausrichten der Blenden ist nicht erforderlich.

Dabei ist durch die Anbringung der Blenden vorzugsweise an den Rändern der Blendenöffnung und eine geeignete Dimensionierung der Größen der Blenden gewährleistet, dass zwischen der Linse und den Blenden nahezu keine Freiräume bleiben, durch welche Störlicht in das Innere des Gehäuses gelangen könnte. Kleine verbleibende Freiräume zwischen Blende, Linse und den Rändern der Aufnahme können durch geeignete Lichtfallen gegen Eindringen von Störlicht gesichert werden. Derartige Lichtfallen können in Form von Vorsprüngen an den Blenden oder den Wandelementen gebildet sein. Diese Vorsprünge können besonders vorteilhaft einstückig mit den Blenden oder Wandelementen ausgebildet sein, wodurch diese einfach und kostengünstig herstellbar sind.

Die Optikelemente bildenden Linsen werden besonders vorteilhaft an der Aufnahme eingerastet. Damit können die Linsen bei Bedarf aus der Aufnahme wieder gelöst und durch andere Linsen ersetzt werden. Die hierfür vorgesehenen Rastmittel sind so ausgebildet, dass Linsen unterschiedlicher Größe an der Aufnahme fixiert werden können.

Als weitere Optikelemente können auch optische Filter, wie zum Beispiel Polarisationsfilter, an der Aufnahme fixiert werden. Auch diese Optikelemente können in unterschiedlicher Ausprägung und Größe an der Aufnahme fixiert werden.

Die Erfindung wird im Nachstehenden anhand der Zeichnungen erläutert. Es zeigen:
- Figur 1:: Schematische Darstellung eines Ausführungsbeispiels eines optischen Sensors.
- Figur 2:: Perspektive Ansicht eines Gehäuses eines optischen Sensors gemäß Figur 1 mit einer ersten, kleinen Linse.
- Figur 3:: Perspektivische Darstellung des Innenraums des Gehäuses gemäß Figur 2.
- Figur 4:: Perspektivische Ansicht des Gehäuses gemäß Figur 2 mit einer zweiten, großen Linse.
- Figur 5:: Perspektivische Darstellung des Innenraums des Gehäuses gemäß Figur 4.

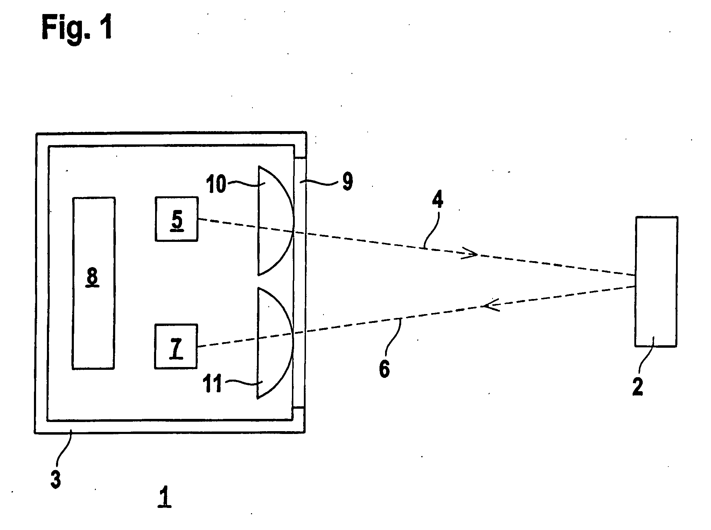

Figur 1 zeigt schematisch ein Ausführungsbeispiel eines optischen Sensors 1. Mit dem optischen Sensor 1 werden Objekte 2 innerhalb eines Überwachungsbereichs erfasst. Der optische Sensor 1 kann generell als Lichtschranke, Reflexionslichtschranke, Distanzsensor oder dergleichen ausgebildet sein. Im vorliegenden Fall ist der optische Sensor 1 als Lichttaster ausgebildet.

Der optischer Sensor 1 gemäß Figur 1 ist in einem Gehäuse 3 integriert. Als Sensorkomponenten sind in dem Gehäuse 3 ein Sendelichtstrahlen 4 emittierender Sender 5 und ein Empfangslichtstrahlen 6 empfangender Empfänger 7 angeordnet. Der Sender 5 besteht aus einer Leuchtdiode, der Empfänger 7 kann beispielsweise aus einer Photodiode bestehen. Prinzipiell kann der Sender 5 aus mehreren Sendeelementen bestehen. Ebenso kann der Empfänger 7 aus mehreren Empfangselementen bestehen. Der Sender 5 und der Empfänger 7 sind an eine Auswerteeinheit 8 angeschlossen, die von einem Microcontroller oder dergleichen gebildet ist. Die Auswerteeinheit 8 dient zur Ansteuerung des Senders 5 und zur Auswertung der Empfangssignale, wobei aus diesen ein Objektfeststellungssignal abgeleitet wird. Im vorliegenden Fall wird in der Auswerteeinheit 8 durch eine Schwellwertbewertung der Empfangssignale ein binäres Schaltsignal generiert, dessen Schaltzustände angeben, ob sich ein Objekt 2 im Überwachungsbereich befindet oder nicht. Das Objektfeststellungssignal wird über einen nicht dargestellten Schaltausgang ausgegeben.

Die Sendelichtstrahlen 4 und die Empfangslichtstrahlen 6 sind durch ein Austrittsfenster 9 in der dem Überwachungsbereich zugewandten Frontseite des Gehäuses 3 geführt. Als Optikelemente sind eine Sendeoptik 10 zur Strahlformung der Sendelichtstrahlen 4 und eine Empfangsoptik 11 zur Fokussierung der Empfangslichtstrahlen 6 vorgesehen.

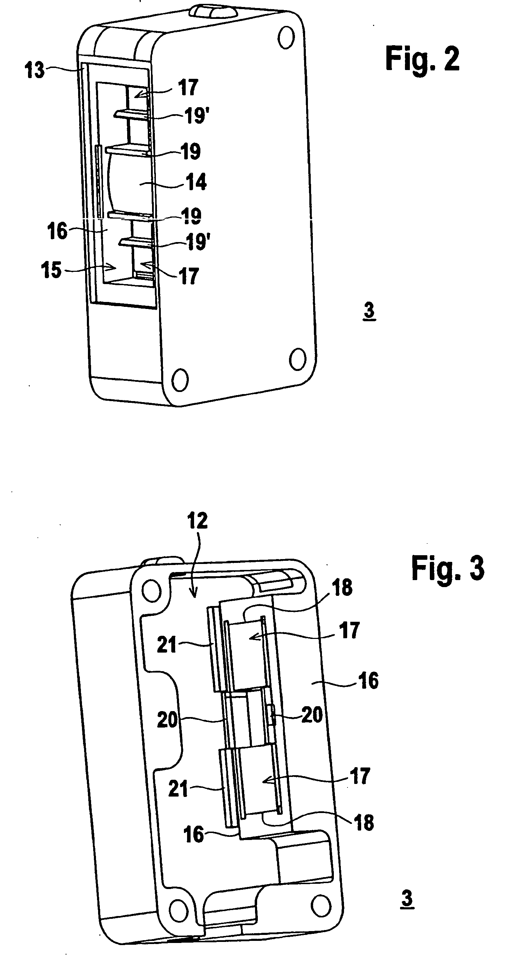

Die Figuren 2 und 3 zeigen ein Ausführungsbeispiel eines Gehäuses 3 für einen optischen Sensor 1 gemäß Figur 1. Das in den Figuren 2 und 3 dargestellte Gehäuse 3 besteht im Wesentlichen aus einem Kunststoffspritzteil. In den Innenraum des Gehäuses 3 sind über eine Einführöffnung 12 an einer Seitenwand die Sensorkomponenten einführbar. Die Einführöffnung 12 wird mit einem nicht dargestellten Gehäusedeckel als weiterer Bestandteil des Gehäuses 3 abgeschlossen. Auch der Gehäusedeckel besteht aus einem Kunststoffspritzteil. In der Frontwand des Gehäuses 3 befindet sich, wie aus Figur 2 ersichtlich eine Aussparung 13 zur Aufnahme des Austrittsfensters 9. Als Sensorkomponenten werden der Sender 5, der Empfänger 7 und die Auswerteeinheit 8 auf einer Leiterplatte in den Innenraum des Gehäuses 3 geführt und dort fixiert. Je nach Anordnung des Senders 5 relativ zum Empfänger 7 und je nach Ausbildung des Senders 5 in Form eines Sendeelements oder mehrerer Sendeelemente sowie des Empfängers 7 in Form eines Empfangselements oder mehrere Empfangselemente werden Optikelemente, insbesondere Sendeoptiken 10 und Empfangsoptiken 11 in unterschiedlicher Ausbildung, Größe und Anzahl zum Einbau in dem Gehäuse 3 des optischen Sensors 1 benötigt.

Im vorliegenden Fall kann der optische Sensor 1 als Lichttaster mit koaxialem Strahlengang der Sendelichtstrahlen 4 und der Empfangslichtstrahlen 6 ausgebildet sein. Damit wird als Optikelement eine Linse 14 benötigt, die als kombinierte Sende- und Empfangsoptik dient.

Je nach Variante des optischen Sensors 1 kann die Linse 14 unterschiedliche Dimensionen aufweisen. Das Gehäuse 3 des optischen Sensors 1 weist eine Aufnahme auf, welche zur Fixierung unterschiedlicher Optikelemente adaptierbar ist.

Die Aufnahme weist eine hinter der Aussparung 13 angeordnete Blendenöffnung 15 auf. Der Querschnitt der Blendenöffnung 15 ist nur unwesentlich kleiner als die Aussparung 13 zur Lagerung des Austrittsfensters 9 und weist eine rechteckige oder runde Kontur auf. Die Blendenöffnung 15 ist durch Wandelemente 16 begrenzt, die Bestandteil des Kunststoffspritzteils des Gehäuses 3 sind. Diese Wandelemente 16 bilden einen lichtundurchlässigen Tubus, in welchen Linsen 14 unterschiedlicher Größe einführbar sind.

Als weitere Bestandteile der Aufnahme sind zwei identisch ausgebildete Blenden 17 vorgesehen, welche an dem oberen und unteren Rand der Blendenöffnung 15 über Schwächungsstrukturen 18 mit den Wandelementen 16 verbunden sind. Die Blenden 17 weisen jeweils einen rechteckigen oder runden Querschnitt auf. Die Schwächungsstrukturen 18 können insbesondere als Filmscharniere ausgebildet sein. Die Blenden 17 bestehen aus Kunststoff und sind einstückig mit den Wandelementen 16 ausgebildet und sind somit Bestandteil des Kunststoffspritzteils.

Durch die Schwächungsstrukturen 18 sind die Blenden 17 klappbar an den Wandelementen 16 gelagert. Wie aus Figur 2 ersichtlich stehen von der zur Frontseite des Gehäuses 3 hin gewandten Vorderseite der Blende 17 zwei Vorsprünge 19, 19' hervor, die als Lichtfallen dienen. Die Vorsprünge 19, 19' sind einstückig mit den jeweiligen Blenden 17 ausgebildet.

Bei der Ausführungsform gemäß den Figuren 2 und 3 wird in die Aufnahme des Gehäuses 3 eine Linse 14 mit rechteckigem oder rundem Querschnitt eingesetzt, dessen Querschnittsfläche erheblich kleiner ist als die Querschnittsfläche der Blendenöffnung 15.

Wie aus den Figuren 2 und 3 ersichtlich sind dabei die Blenden 17 in ihrer Grundstellung angeordnet, in welcher diese in einer gemeinsamen vertikalen Ebene in der Blendenöffnung 15 liegen. Die Blenden 17 sind so bemessen, dass zwischen deren freien Rändern ein Zwischenraum verbleibt, der an die Querschnittsfläche der Linse 14 angepasst ist. Durch die Blenden 17 wird somit die Größe der Blendenöffnung 15 reduziert. Bei in ihrer Grundstellung liegenden Blenden 17 kann somit die Linse 14 in den Zwischenraum zwischen diesen Blenden 17 in die Aufnahme eingeschoben und dort fixiert werden. Hierzu weist die Linse 14 an ihren rückseitigen Rändern Rastmittel 20 in Form von Rastschienen auf, die an den dem Innenraum des Gehäuses 3 zugewandten hinteren Rändern der Wandelemente 16 eingerastet werden.

An der auf diese Weise in der Blendenöffnung 15 fixierten Linse 14 schließen die Blenden 17 mit ihren freien Rändern dicht an, so dass nahezu kein Zwischenraum verbleibt, durch welchen Störlicht in das Innere des Gehäuses 3 gelangen könnte. Die Lichtfallen an den Vorderseiten der Blenden 17 verhindern zudem das Eintreten von Störlicht an der Linse 14 vorbei in den Innenraum des Gehäuses 3.

Da die Blenden 17 klappbar an den Rändern der Wandelemente 16 angebracht sind und so die Blenden 17 durch Biegen der Schwächungsstrukturen 18 bei Bedarf in Richtung des Innenraums des Gehäuses 3 gebogen werden können, sind zwischen den längsseitigen Rändern der Blenden 17 und den Wandelementen 16 kleine Zwischenräume vorgesehen, durch welche ein reibungsfreies Aufklappen der Blenden 17 ermöglicht wird. Damit durch diese Zwischenräume kein Störlicht in den Innenraum des Gehäuses 3 eindringt, sind im Bereich der hinteren Ränder der Wandelemente 16 weitere Lichtfallen bildende Vorsprünge 21 vorgesehen, welche diese Zwischenräume abschirmen. Aus Gründen der Übersichtlichkeit sind in Figur 3 nur die Vorsprünge 21 auf einer Seite der Aufnahme dargestellt. An der gegenüberliegenden Seite befinden sich identische, weitere Vorsprünge, die in Figur 3 nicht dargestellt sind.

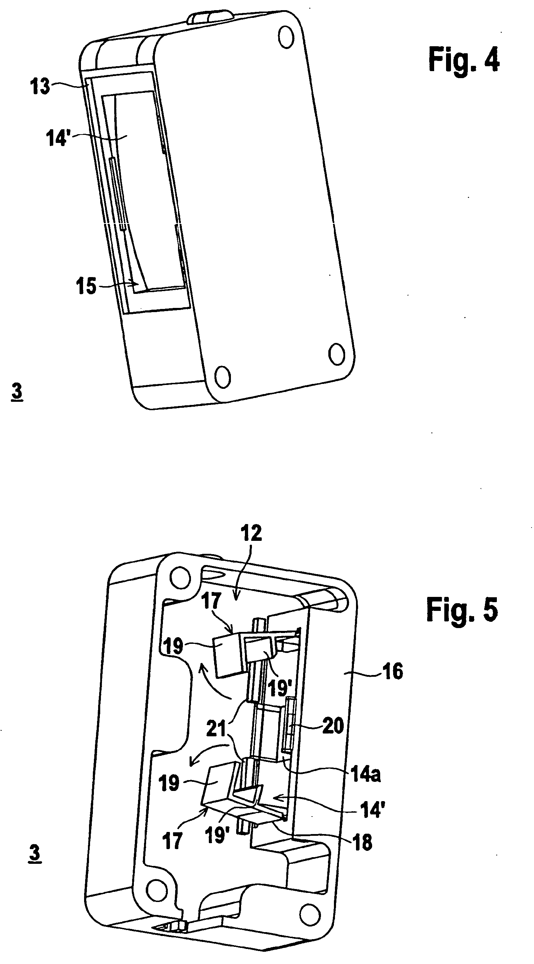

Die Figuren 4 und 5 zeigen dasselbe Gehäuse 3 wie in den Figuren 2 und 3 dargestellt. Im Unterschied zu der Ausführungsform gemäß den Figuren 2 und 3 ist bei dem Ausführungsbeispiel gemäß den Figuren 4 und 5 eine größere Linse 14' als Optikelement vorgesehen. Diese Linse 14' ersetzt die kleinere Linse 14 zur Ausbildung einer Sensorvariante des optischen Sensors 1. Die Linse 14' kann beispielsweise als kombinierte Sende- und Empfangsoptik für in Abstand zueinander geführten Sendelichtstrahlen 4 und Empfangslichtstrahlen 6 sein.

Zur Montage der Linse 14' im optischen Sensor 1 wird diese analog zur Linse 14 in die Blendenöffnung 15 der Aufnahme eingeschoben und mit Rastmitteln 20 am hinteren Ende der Linse 14' an den Wandelementen 16 eingerastet. Wie aus Figur 5 ersichtlich ist an der Rückseite des sich über die gesamte Aufnahme erstreckenden Linsenkörpers der Linse 14` ein Sockel 14a angeformt, der dieselben Maße wie der rückseitige Teil der Linse 14 aufweist. An diesem Sockel 14a sind Rastmittel 20 angeordnet, die den Rastmitteln 20 der Linse 14 entsprechen. Somit kann die Linse 14' in gleicher Weise wie die Linse 14 an der Aufnahme fixiert werden.

Da die Linse 14` erheblich größer ist als der Abstand der Blenden 17 in der Blendenöffnung 15, werden bei Einschieben der Linse 14` in die Aufnahme die Blenden 17 verdrängt, das heißt durch Aufbiegen entlang der Schwächungsstrukturen 18 in Richtung des Innenraumes geklappt. Durch dieses Umklappen der Blenden 17 wird die Blendenöffnung 15 vergrößert und an die Maße der Linse 14' ohne mechanische Justierarbeiten angepasst.

Die Vorsprünge 21 an den Rändern der Wandelemente 16 sind dabei so dimensioniert, dass die Blenden 17 beim Umklappen ohne wesentliche Reibung an diesen Vorsprüngen 21 vorbeibewegt werden können.

Die Blenden 17 wiederum sind so dimensioniert, dass diese nach dem Umklappen nicht in den Bereich der Linse 14' ragen und diese abschatten.

Bei den Ausführungsbeispielen gemäß den Figuren 2 - 5 sind zwei Sensorvarianten mit unterschiedlich großen Linsen 14, 14` als Optikelementen beschrieben, die wahlweise in die Aufnahme eingesetzt werden können.

Generell ist die Aufnahme eines optischen Sensors 1 derart ausgebildet, dass auch mehrere Linsentypen als Optikelemente in die Aufnahme einsetzbar sind. Dabei können prinzipiell mehrere Linsen 14, 14' gleichzeitig in der Aufnahme eingesetzt werden.

Weiterhin kann die Aufnahme des optischen Sensors 1 dahingehend erweitert sein, dass in dieser zusätzliche Optikelemente, wie zum Beispiel optische Filter, fixiert werden können. Derartige optische Filter können insbesondere als Polarisationsfilter ausgebildet sein. Die optischen Filter können insbesondere im Bereich zwischen dem Austrittsfenster 9 und den Linsen 14, 14` angeordnet sein. Zur Fixierung der optischen Filter können an der Aufnahme nicht dargestellte Führungen vorgesehen sein.

Bezugszeichenliste
- (1): Optischer Sensor
- (2): Objekt
- (3): Gehäuse
- (4): Sendelichtstrahlen
- (5): Sender
- (6): Empfangslichtstrahlen
- (7): Empfänger
- (8): Auswerteeinheit
- (9): Austrittsfenster
- (10): Sendeoptik
- (11): Empfangsoptik
- (12): Einführöffnung
- (13): Aussparung
- (14): Linse
- (14'): Linse
- (14a): Sockel
- (15): Blendenöffnung
- (16): Wandelemente
- (17): Blenden
- (18): Schwächungsstrukturen
- (19): Vorsprünge
- (19'): Vorsprünge
- (20): Rastmittel
- (21 ): Vorsprünge

## Patentansprüche

1. Optischer Sensor mit wenigstens einem Gehäuse zur Aufnahme von Sensorkomponenten, umfassend einen Sendelichtstrahlen emittierenden Sender, einen Empfangslichtstrahlen empfangenden Empfänger und eine Auswerteeinheit, in welcher in Abhängigkeit der am Ausgang des Empfängers anstehenden Empfangssignale ein Objektfeststellungssignal generiert wird, **dadurch gekennzeichnet, dass** in dem Gehäuse (3) eine Aufnahme vorgesehen ist, welche eine Blendenöffnung (15) variabler Größe aufweist, in dem zumindest ein Teil der Blendenöffnung (15) durch zumindest eine klappbare Blende (17) abdeckbar ist, wodurch die Aufnahme zur Fixierung von Optikelementen unterschiedlicher Anzahl und/oder Größe adaptierbar ist.

2. Optischer Sensor nach Anspruch 1, **dadurch gekennzeichnet, dass** die Blendenöffnung (15) von Wandelementen (16) begrenzt ist, welche Bestandteile des Gehäuses (3) sind.

3. Optischer Sensor nach einem der Ansprüche 1 oder 2, **dadurch gekennzeichnet, dass** die Blendenöffnung (15) einen rechteckigen Querschnitt aufweist, wobei an zwei gegenüberliegenden Rändern der Blendenöffnung (15) jeweils eine Blende (17) fixiert ist.

4. Optischer Sensor nach Anspruch 3, **dadurch gekennzeichnet, dass** die Blenden (17) einstückig mit den Wandelementen (16) ausgebildet sind.

5. Optischer Sensor nach einem der Ansprüche 3 oder 4, **dadurch gekennzeichnet, dass** an den Nahtstellen zwischen den Blenden (17) und den Wandelementen (16) Schwächungsstrukturen (18) vorgesehen sind.

6. Optischer Sensor nach Anspruch 5, **dadurch gekennzeichnet, dass** die Schwächungsstrukturen (18) von Filmscharnieren gebildet sind.

7. Optischer Sensor nach einem der Ansprüche 2 bis 6, **dadurch gekennzeichnet, dass** an der oder jeder Blende (17) und/oder an den Wandelementen (16) der Aufnahme Lichtfallen bildende Vorsprünge (19, 19`, 21) vorgesehen sind.

8. Optischer Sensor nach einem der Ansprüche 6 bis 7, **dadurch gekennzeichnet, dass** die Optikelemente von Linsen (14, 14`) zur Strahlformung der Sendelichtstrahlen (4) und/oder der Empfangslichtstrahlen (6) gebildet sind.

9. Optischer Sensor nach Anspruch 8, **dadurch gekennzeichnet, dass** die Linsen (14, 14`) in der Blendenöffnung (15) einrastbar sind.

10. Optischer Sensor nach einem der Ansprüche 1 bis 9, **dadurch gekennzeichnet, dass** bei in der Blendenöffnung (15) liegenden Blenden (17) wenigstens eine verkleinerte Blendenöffnung (15) verbleibt, in welche eine Linse (14) einsetzbar ist.

11. Optischer Sensor nach einem der Ansprüche 1 bis 10, **dadurch gekennzeichnet, dass** in die Blendenöffnung (15) wenigstens eine Linse (14) einsetzbar ist, durch welche wenigstens eine Blende (17) aus dem Bereich der Blendenöffnung (15) verdrängt wird.

12. Optischer Sensor nach einem der Ansprüche 7 bis 11, **dadurch gekennzeichnet, dass** als weitere Optikelemente optische Filter vorgesehen sind.

13. Optischer Sensor nach Anspruch 12, **dadurch gekennzeichnet, dass** die optischen Filter als Polarisationsfilter ausgebildet sind.

14. Optischer Sensor nach einem der Ansprüche 1 bis 13, **dadurch gekennzeichnet, dass** dieser eine Lichtschranke, eine Reflexionslichtschranke, ein Lichttaster oder ein Distanzsensor ist.

## Claims

1. Optical sensor with at least one housing for reception of sensor components, comprising a transmitter emitting transmitted light beams, a receiver receiving received light beams, and an evaluating unit, in which an object detection signal is generated in dependence on the received signals present at the output of the receiver, **characterised in that** provided in the housing (3) is a mount having an aperture opening (15) of variable size, in which at least a part of the aperture opening (15) is coverable by at least one hinged aperture plate (17), whereby the mount is adaptable for the fixing of optical elements of different number and/or size.

2. Optical sensor according to claim 1, **characterised in that** the aperture opening (15) is bounded by wall elements (16) which are components of the housing (3).

3. Optical sensor according to one of claims 1 and 2, **characterised in that** the aperture opening (15) has a rectangular cross-section, wherein a respective aperture plate (17) is fixed at two opposite edges of the aperture opening (15).

4. Optical sensor according to claim 3, **characterised in that** the aperture plates (17) are formed integrally with the wall elements (16).

5. Optical sensor according to one of claims 3 and 4, **characterised in that** weakened structures (18) are provided at the joint locations between the aperture plates (17) and the wall elements (16).

6. Optical sensor according to claim 5, **characterised in that** the weakened structures (18) are formed by film hinges.

7. Optical sensor according to any one of claims 2 to 6, **characterised in that** projections (19, 19,', 21) forming light traps are provided at the or each aperture plate (17) and/or at the wall elements (16) of the mount.

8. Optical sensor according any one of claims 6 and 7, **characterised in that** the optical elements are formed by lenses (14, 14') for beam shaping of the transmitted light beams (4) and/or of the received light beams (6).

9. Optical sensor according to claim 8, **characterised in that** the lenses (14, 14') are detentable in the aperture opening (15).

10. Optical sensor according to any one of claims 1 to 9, **characterised in that** when aperture plates (17) lie in the aperture opening (15), at least one aperture opening (15) of reduced size is left, into which a lens (14) is insertable.

11. Optical sensor according to any one of claim 1 to 10, **characterised in that** at least one lens (14) by which at least one aperture plate (17) is urged out of the region of the aperture opening (15) is insertable into aperture opening (15).

12. Optical sensor according to any one of claims 7 to 11, **characterised in that** optical filters are provided as further optical elements.

13. Optical sensor according to claim 12, **characterised in that** the optical filters are constructed as polarisation filters.

14. Optical sensor according to any one of claims 1 to 13, **characterised in that** this is a light barrier, a reflection light barrier, a light scanner or a distance sensor.

## Revendications

1. Capteur optique avec au moins un boîtier pour recevoir des composants du capteur, comprenant un émetteur émettant des rayons lumineux d'émission, un récepteur recevant des rayons lumineux de réception et une unité d'évaluation dans laquelle, en fonction des signaux de réception présents à la sortie du récepteur, un signal de détection d'objet est généré, **caractérisé en ce que** dans le boîtier (3), il est prévu un réceptacle qui présente une ouverture d'obturateur (15) de taille variable, au moins une partie de l'ouverture d'obturateur (15) pouvant être masquée par au moins un obturateur pivotant (17), grâce à quoi le réceptacle est adaptable pour la fixation d'éléments optiques en nombre et/ou de taille différents.

2. Capteur optique selon la revendication 1, **caractérisé en ce que** l'ouverture d'obturateur (15) est limitée par des éléments de paroi (16) qui font partie du boîtier (3).

3. Capteur optique selon l'une des revendications 1 ou 2, **caractérisé en ce que** l'ouverture d'obturateur (15) présente une section rectangulaire, un obturateur (17) étant fixé à chacun des deux bords opposés de l'ouverture d'obturateur (15).

4. Capteur optique selon la revendication 3, **caractérisé en ce que** les obturateurs (17) sont réalisés d'une pièce avec les éléments de paroi (16).

5. Capteur optique selon l'une des revendications 3 ou 4, **caractérisé en ce que** des structures d'affaiblissement (18) sont prévues aux jonctions entre les obturateurs (17) et les éléments de paroi (16).

6. Capteur optique selon la revendication 5, **caractérisé en ce que** les structures d'affaiblissement (18) sont formées de charnières film.

7. Capteur optique selon l'une des revendications 2 à 6, **caractérisé en ce que** des saillies (19, 19', 21) formant des pièges à lumière sont prévues sur le ou chaque obturateur (17) et/ou sur les éléments de paroi (16) du réceptacle.

8. Capteur optique selon l'une des revendications 6 à 7, **caractérisé en ce que** les éléments optiques sont formés de lentilles (14, 14') pour la conformation du faisceau des rayons lumineux d'émission (4) et/ou des rayons lumineux de réception (6).

9. Capteur optique selon la revendication 8, **caractérisé en ce que** les lentilles (14, 14') sont encliquetables dans l'ouverture d'obturateur (15).

10. Capteur optique selon l'une des revendications 1 à 9, **caractérisé en ce que** dans le cas d'obturateurs (17) se trouvant dans l'ouverture d'obturateur (15), il reste au moins une ouverture d'obturateur (15) réduite dans laquelle une lentille (14) est insérable.

11. Capteur optique selon l'une des revendications 1 à 10, **caractérisé en ce qu'**il est possible d'insérer dans l'ouverture d'obturateur (15) au moins une lentille (14) par laquelle au moins un obturateur (17) est délogé de la zone de l'ouverture d'obturateur (15).

12. Capteur optique selon l'une des revendications 7 à 11, **caractérisé en ce que** des filtres optiques sont prévus en tant qu'éléments optiques supplémentaires.

13. Capteur optique selon la revendication 12, **caractérisé en ce que** les filtres optiques sont réalisés sous la forme de filtres polarisants.

14. Capteur optique selon l'une des revendications 1 à 13, **caractérisé en ce que** celui-ci est une barrière photoélectrique, une barrière photoélectrique à réflexion, un détecteur photosensible ou un capteur de distance.
